# EUROPEAN PATENT APPLICATION

(11) **EP 3 595 077 A1**
(43) Date of publication of application: **15.01.2020**
(21) Application number: 18182432.7
(22) Date of filing: 09.07.2018
(51) Int. Cl.: H01M 10/613, H01M 10/6568, H01M 10/6557, H01M 10/617, H01M 2/10

(54) **TEMPERATURE REGULATION ELEMENT, BATTERY MODULE, BATTERY PACK AND USE**

(71) Applicant: Valmet Automotive Oy, 23501 Uusikaupunki (FI)
(72) Inventor: Kopra, Lasse, 23200 Vinkkilä (FI); Hoivala, Matti, 23501 Uusikaupunki (FI)
(74) Representative: Papula Oy

(57) **Abstract**

A temperature regulation element for a battery cell (2) is disclosed. It comprises a metal body (1) comprising at least one heat-exchange surface (11) for making thermal contact with a battery cell (2); at least one first fluid channel (3) with an inlet end (31) and an outlet end (32) for thermal transfer fluid to flow in, wherein the first fluid channel (3) extends inside the body (1). The temperature regulation element is characterized in that fluid distribution means (4) forming a second fluid channel (41) is positioned inside the first fluid channel (3) for providing thermal transfer fluid gradually into the first fluid channel (3) along the length of the first fluid channel (3). A battery module and a battery pack are also disclosed.

## Description

### TECHNICAL FIELD

The present invention relates to a temperature regulation element, to a battery module, to a battery pack and to use of a temperature regulation element.

### BACKGROUND OF THE INVENTION

The operational life of rechargeable battery cells depends to a large extent on the temperature of the battery cells during their life, and especially during use. To obtain the longest possible operational life, the operating temperature of the battery cells should be maintained on a certain level, or within a certain temperature range. Due to electrical resistance, recharging or discharging battery cells creates thermal energy, which has to be conducted away from the cells as effectively as possible to maintain the battery cell temperature close to optimum. The thermal energy produced during recharging or discharging depends on the speed of recharging and discharging: the faster the process, the more thermal energy is produced.

Further, in some situations it must be possible to warm up the battery cells in order to get them to a desired operating temperature at the beginning of use.

Temperature regulation of battery modules is performed by placing the battery cells into thermal contact with temperature regulation elements having channels in which thermal transfer fluid flows. Providing even temperature to all battery cells within a battery pack has turned out to be challenging. In the current systems, solutions have been sought by providing multiple structures in which the thermal transfer fluid flows. The drawbacks of the current solutions include increased number of components needed for a temperature regulation system, increased number of connections between the components, and the associated increase in cost, as well as risk of fluid leakage. Alternative solutions include the use of thermoelectric effect and phase transition in thermal regulation of the battery cells.

### SUMMARY OF THE INVENTION

The current disclosure relates to a temperature regulation element for a battery cell comprising:
a metal body. The metal body comprises at least one heat-exchange surface for making thermal contact with a battery cell, at least one first fluid channel with an inlet end and an outlet end for thermal transfer fluid to flow in, wherein the first fluid channel extends inside the body. The temperature regulation element is characterized in that fluid distribution means forming a second fluid channel is positioned inside the first fluid channel for providing thermal transfer fluid gradually into the first fluid channel along the length of the first fluid channel.

The current disclosure also relates to a battery module, and to a battery pack which are characterized in that they comprise a temperature regulation element according to the current disclosure. The current disclosure further relates to use of a temperature regulation element according to the present disclosure.

An advantage of the temperature regulation element, the battery module and the battery pack according to the present disclosure is that temperature regulation of the battery cells may be improved over prior-art solutions. Especially, the temperature difference between the battery cells and the thermal transfer fluid may be kept more uniform throughout the battery pack, which reflects in more uniform temperature of the battery cells.

The performance of the battery pack is determined by the weakest battery cell, uniform ageing and decrease in performance is important for utilizing the battery pack as efficiently as possible. If some cells in the battery pack, for example battery cells in certain positions, age faster than others, all battery cells are replaced when the performance of the first ones deteriorates below a predetermined threshold. The temperature regulation element according to the present disclosure might therefore have the advantage of improving the material usage of the battery cells, since a larger proportion of the battery cells might serve their inherent usage life and not be prematurely replaced.

As temperature fluctuations, and especially heating, accelerate the ageing of the battery cells, maintaining all the battery cells as close to the optimum temperature as possible is a key parameter for increasing the life of a battery pack. A more uniform temperature difference between the thermal transfer fluid and the battery cells throughout the battery module may allow better optimization of the functional parameters of the thermal transfer fluid, such as temperature and flow speed, to maintain the battery cells close to the optimal temperature. Thus, the temperature regulation element according to the current disclosure may extend operational life of the battery cells. Also the number of recharge/discharge cycles may increase.

Yet another advantage is that it might be possible to recharge and discharge the battery cells faster, while remaining sufficiently close to the optimal temperature.

The advantages of the current temperature regulation element may be especially apparent the larger the temperature regulation element is, as the distance that thermal transfer fluid is engages in thermal exchange with other parts of the element increases.

### BRIEF DESCRIPTION OF THE DRAWINGS

The accompanying drawings, which are included to provide a further understanding of the disclosure and constitute a part of this specification, illustrate embodiments and together with the description help to explain the principles of the disclosure. In the drawings:
Figure 1A depicts a cross section of an exemplary embodiment of the temperature regulation element according to the present disclosure.
Figure 1B presents a longitudinal section of the embodiment of the temperature regulation element presented in figure 1A.
Figure 2, panels A to D, depicts cross sections of exemplary embodiments of the temperature regulation element according to the current disclosure.
Figure 3, panels A to D presents a cross section of the second fluid channel in a schematic manner.
Figure 4, panels A to D, depicts exemplary embodiments of the openings along the second fluid channel in a schematic manner.
Figure 5, panels A to E, is a schematic presentation of exemplary embodiments of the second fluid channel according to the current disclosure.
Figure 6, panels A and B, is a schematic presentation of the relative positions of the openings along the second fluid channel.
Figure 7, panels A and B, illustrates the temperature distribution in an embodiment of the temperature regulation element compared to a prior-art temperature regulation element.
Figure 8, panels A to C, shows an example of flow velocities of the thermal transfer fluid flowing in an exemplary embodiment of the temperature regulation element according to the current disclosure.

### DETAILED DESCRIPTION

The temperature regulation element, the battery module and the battery pack according to the present disclosure may be used in any applications utilizing battery cells. Their advantages may be apparent in fully or partly electricity-powered vehicles, such as land vehicles, ships and airplanes. Additionally, they can be used in stationary electricity sources, such as reserve power sources and industrial machinery.

In an aspect, a temperature regulation element for a battery cell comprising a metal body is disclosed. The metal body comprises at least one heat-exchange surface for making thermal contact with a battery cell and at least one first fluid channel with an inlet end and an outlet end for thermal transfer fluid to flow in, wherein the first fluid channel extends inside the body. The temperature regulation element is characterized in that fluid distribution means forming a second fluid channel is positioned inside the first fluid channel for providing thermal transfer fluid gradually into the first fluid channel along the length of the first fluid channel.

The temperature regulation element functions as a heat sink. It dissipates heat generated during the functioning of the battery cells. However, the temperature regulation element can also be used for heating up the battery cells. The present temperature regulation element may be especially useful in vehicles, or industrial power storage applications. The battery cells, and contacts between them, may be organized in various ways, as is known to the skilled person.

The battery cells are in thermal contact with the temperature regulation element through the heat-exchange surface of the body. There may be one or more heat-exchange surfaces in a temperature regulation element. For example, if the body is positioned between two battery cells, there may be two heat-exchange surfaces in the body. A battery cell may be in thermal contact with one or more temperature regulation elements. For example, two ends, such as the terminal end and the end opposite to the terminal end, may each be in contact with a different temperature regulation element. A temperature regulation element is typically in thermal contact with several battery cells. For example, the battery cells may be arranged side by side, and a temperature regulation element may extend over several of the battery cells.

The thermal contact between the battery cells and the temperature regulation element achieves thermal transfer between the battery cells and the temperature regulation element. Thus, the temperature of the battery cells can be regulated through the temperature of the temperature regulation element.

The temperature regulation element according to the present disclosure comprises a metal body. Metal, such as copper, steel or aluminium, is suitable for use in temperature regulation elements, as is has good heat conductance.

The body of the temperature regulation element is typically shaped as a parallelepiped, most typically as a rectangular cuboid. In addition to its general shape, the body may comprise shapes that are used to fit the temperature regulation element in its place in the battery module or battery pack. The body may also contain protrusions that improve the heat exchange capacity of the temperature regulation element, such as heat dissipation ribs or thermal transfer fins extending between battery cells.

The corners and edges of the body may be rounded to facilitate installation and/or to avoid sharp points that may damage other components or cause injuries.

In one embodiment, the body is s made of extruded aluminum or aluminum alloy. Amongst metals, aluminium may be preferred especially in mobile applications, such as vehicles, since it is light, to limit the weight of the power source. This again, may be beneficial for the power consumption of the vehicle, which is reflected in its environmental friendliness, using cost and the operational range of the vehicle. Further, aluminium extrusion may be performed accurately. In an embodiment, the body comprises anodized aluminum. Anodizing might contribute to the electrical insulation between the battery cells and the temperature regulation element. Further, it may be possible to produce the temperature regulation by alternative means, such as three-dimensional printing. The body may be manufactured as one seamless piece.

The temperature of the temperature regulation element is adjusted through thermal transfer fluid, which flows in a fluid channel. In the current disclosure, the body comprises at least one fist fluid channel. Thermal transfer fluid flows in the first fluid channel and is in thermal transfer contact with the body. There may be more than one first fluid channel in the body, depending, for example, on the size and thermal transfer capacity requirements of the temperature regulation element, as well as the orientation of the battery cells. In one embodiment, the body comprises one first fluid channel. In one embodiment, the body comprises two or more first fluid channels. There may be, for example, two, three or four first fluid channels in the body.

The first fluid channel comprises an inlet end, which is the upstream end of the first fluid channel in respect to the flow direction of the thermal transfer fluid. There may be an inlet system regulating the flow of the thermal transfer fluid into the first fluid channel in the inlet end of the first fluid channel. The first fluid channel further comprises an outlet end, which is the downstream end of the first fluid channel in respect to the flow direction of the thermal transfer fluid.

The first fluid channel extends inside the body. In other words, the first fluid channel is a closed channel. It may be manufactured, for example by machining into a metal piece forming the body. If the body is manufactured by extrusion, the first fluid channel may be formed in the extrusion process. The first fluid channel may have a circular cross section. Also other cross sections, such as an oval or a flat shape, may be possible. In some embodiments, it may be advantageous for the first fluid channel to have an angular, such as a rectangular or a square cross section.

The first fluid channel typically has constant cross-sectional profile, and constant cross-sectional area along its whole length. In some applications, however, the cross-sectional profile and/or the cross-sectional area may vary. For example, it is possible that the first fluid channel increases in diameter towards the outlet end. Further, it is possible that a circular cross section of a first fluid channel expands into a flat channel having semi-circular ends, wherein the height of the expanded channel corresponds to the diameter of the circular channel, or *vice versa.*

The first fluid channel may have a variable form. In one embodiment, the at least one first fluid channel is straight and extends substantially along the whole length of the body. A straight first fluid channel is simple to manufacture, as machining in one direction or a simple extrusion process may be utilized. Typically, the first fluid channel extends in the same direction with the overall shape of the body. In other words, the first fluid channel is not oblique. Typically, the first fluid channel extends from one end of the body to another, i.e. it extends the whole length of the body. The first fluid channel may extend in the direction of the longer side of the body. However, it is possible that the first fluid channel extends in the direction of the shorter side of the body. The optimal direction of the first fluid channel depends on how the battery module in question is assembled, and can be chosen by the skilled person according to the application in question.

However, in an embodiment, the first fluid channel is U-shaped so that both the inlet end and the outlet end are in the same part of the body of the temperature regulation element. For example, if the temperature regulation element comprises a longitudinal body, the inlet end and the outlet end can be positioned in one end of the longitudinal body, while the first fluid channel extends twice through the body and makes a turn at the opposite end. The form of the first fluid channel (straight, U-shaped, tortuous, etc.) may affect the optimal positioning of the openings through which the thermal transfer fluid is provided into the first fluid channel.

The first fluid channel may be positioned at various distances from the heat-exchange surface. The closer it is, the more rapid the thermal transfer between the first fluid channel and the heat-exchange surface may be directly above the first fluid channel. However, the thermal exchange efficiency may decrease along the heat-exchange surface as the distance from the first fluid channel increases. Therefore, the uniformity of the thermal exchange along the heat-exchange surface, and thus the battery cell temperature, might set a preferable minimum distance from the heat-exchange surface.

In the current disclosure, fluid distribution means is positioned inside the first fluid channel. Thus, the fluid distribution means is at least partly inside the first fluid channel. The fluid distribution means forms a second fluid channel inside the first fluid channel. Thus, at least a part of the fluid distribution means forms the second fluid channel. The fluid distribution means may comprise other parts, either integral or attached to the part forming the second fluid channel, which are in part or completely outside the first fluid channel. For example, the part forming the second fluid channel may extend outside the first fluid channel. Alternatively, the part forming the second fluid channel may be shorter than the first fluid channel, and a separate element of the fluid distribution means may extend inside the first fluid channel to feed thermal transfer fluid into the second fluid channel. The fluid distribution means may further assist in initially allocating the thermal transfer fluid between the first fluid channel and the second fluid channel when the thermal transfer fluid is directed into the body of the temperature regulation element.

In the temperature regulation element according to the current disclosure, thermal transfer fluid flows in the second fluid channel and is gradually provided in the first fluid channel along the length of the first fluid channel. In other words, at least part of the thermal transfer fluid enters the second fluid channel before entering the first fluid channel. This gradual entry of the thermal transfer fluid into the first fluid channel may even out the thermal transfer fluid's temperature along the length of the first fluid channel. Without limiting the current disclosure to any specific theory, the thermal exchange between the body and the thermal transfer fluid takes place in the first fluid channel. As the thermal transfer fluid enters the first fluid channel, its temperature begins to approach that of the body as it flows along the first fluid channel and continuously engages in thermal exchange with the body. In many situations, this means that the temperature of the thermal transfer fluid rises. However, also the opposite situation is possible. As the temperature difference between the body and the thermal transfer fluid decreases, the speed of thermal exchange also decreases. In other words, the temperature regulation efficiency is lower as the temperature difference decreases. This again means that the body, and consequently the battery cell(s), may be further away from the desired temperature leading to adverse effects to the battery module performance.

However, when a part of the thermal transfer fluid flows in the second fluid channel, it remains more isolated from the thermal exchange with the body. Therefore, the temperature of the thermal transfer fluid flowing in the second fluid channel changes more slowly than that of the thermal transfer fluid flowing in the first fluid channel. By providing the thermal transfer fluid from the second fluid channel gradually into the first fluid channel along the length of the first fluid channel, the decrease in temperature difference between the body and the thermal transfer fluid flowing in the first fluid channel might be reduced. In other words, the temperature of the thermal transfer fluid engaging in thermal exchange with the body may be more even along the length of the first fluid channel. This may lead to more even temperature regulation of the body, and consequently of the battery cells.

The end of the second fluid channel closer to the inlet end of the first fluid channel is termed the proximal end, whereas the end of the second fluid channel closer to the outlet end of the first fluid channel is termed the distal end.

In many embodiments, the second fluid channel is positioned in the middle of the first fluid channel in a cross-sectional view. However, depending on the positioning of the body relative to the battery cells, for example, it may be advantageous to position the second fluid channel closer to, or at, one side of the first fluid channel. The cross section of the second fluid channel is typically similar to that of the first fluid channel.

In one embodiment, the second fluid channel is a tube comprising openings along at least a part of its length. A simple way of realizing a second fluid channel is to place a tube inside the first fluid channel. The outer dimensions of the tube must, naturally, be smaller than the respective dimensions of the first fluid channel. In an embodiment where the first fluid channel has a circular cross section, the tube may also have a circular cross section. Also an embodiment where the first fluid channel has an elliptical or otherwise flattened cross section and the second fluid channel has a circular cross section may be envisaged.

The tube comprises openings along its length. The size, shape and position of the openings may vary. The openings may be circular, which may be easy to manufacture. However, oval or slit-formed openings may be used as well, for example to affect the flow pattern of the thermal transfer fluid. If the openings are formed as slits, the slits might extend in the direction of the tube, and the length may be variable. For example, circular openings may have a diameter of 0.5 mm to 10 mm, or even up to 15 mm. The size of the openings depends largely on the size of the battery module, and the needed thermal transfer fluid volume flow to achieve appropriate temperature regulation. Therefore, the skilled person is able to adjust the size according to need.

Also the number and frequency of the openings may vary. The openings may be positioned closer to each other in some portion along the length of the tube. Alternatively, the openings may be evenly distributed along the length of the tube. It is also possible, that the openings are absent from one or more areas along the length of the tube. A portion without the openings may typically be in one end, i.e. in the end closest to the inlet end of the first fluid channel, or in the end closest to the outlet end of the first fluid channel.

The openings may be positioned so that there are, for example one, two, three or four openings distributed along the circumference of the tube at a given position of the length of the tube.

The openings may be positioned in one or more rows along the length of the tube. For example, there may be one row of openings in the tube, so that all the openings face the same direction. There may alternatively be two rows on the opposite sides of the tube. If the body is, for example, a flat piece, it may be advantageous to have two rows of openings on opposite sides of the tube, so that the openings face the directions in which the body is thicker (i.e. if a flat body lies horizontally, the thermal transfer fluid flows in horizontal direction from the second fluid channel). This may be advantageous, because when the thermal transfer fluid flows from the second fluid channel into the first fluid channel, its flow direction may be perpendicular, or close to perpendicular, to the flow direction of the thermal transfer fluid flowing in the first fluid channel. This may cause the fluid entering the first fluid channel to "hit" the wall of the first fluid channel opposite to the opening. This again, might break or reduce the thickness of the boundary layer limiting the thermal exchange in the first fluid channel, enhancing the thermal exchange.

The thermal transfer fluid flowing into the first fluid channel through the openings might increase turbulence in the fluid flowing in the first fluid channel. This, again, may be beneficial, as turbulence may positively affect the rate of thermal transfer between thermal transfer fluid and the body. Without limiting the current disclosure to any specific theory, increased turbulence may also reduce the thickness of the boundary layer.

In one embodiment, the tube is made of plastic or of plastic composite, or of aluminium. Plastic and plastic composite materials may have the advantages that the material costs are low and they are easy to work. Additionally, plastic materials have lower heat conductance than metals and thermal transfer fluids. This may assist in slowing down the temperature change of the thermal transfer fluid flowing in the second fluid channel. This again, might allow more careful regulation of the temperature of the thermal transfer fluid flowing in the first fluid channel. Alternatively, the tube may be made of aluminium. Aluminium may be preferred, for example, for its moldability or for its attachability to the body.

In one embodiment, the second fluid channel extends substantially along the whole length of the first fluid channel. In other words, one end of the second fluid channel is at the proximity of the inlet end of the first fluid channel, and another end is at the proximity of the outlet end of the first fluid channel. In some embodiments, the first fluid channel and the second fluid channel have the same length. However, it is also possible, that the second fluid channel is shorter than the first fluid channel. In such embodiments, for example, the second fluid channel is absent from 25%, 35% or 50% of the length of the first fluid channel. It is possible, that the second fluid channel is absent from 70% of the length of the first fluid channel. The second fluid channel may in such embodiments be absent from the outlet end of the first fluid channel.

In one embodiment, the second fluid channel comprises a proximal end at the inlet end of the first fluid channel, and a distal end, and wherein the distal end is closed. The distal end of the second fluid channel may be closed. A cap may be used to close the end of the channel. Alternatively, the channel may be sealed by pinching, melting or other means known in the art. This may bring the advantage all the thermal transfer fluid is forced out of the openings on the second fluid channel.

Alternatively, the distal end of the second fluid channel may be open. In such cases, the end may be contracted or pinched to reduce the volume of the thermal transfer fluid that can flow through the distal end of the second fluid channel.

In one embodiment, the thermal transfer fluid is configured to enter the first fluid channel only through the fluid distribution means. This may allow simple design of the structures at the inlet of the first fluid channel, since all the thermal transfer fluid may be directed into the second fluid channel, and the inlet end of the first fluid channel may be closed. For example, a cap having an opening or a bore for the second fluid channel may be used.

In one embodiment, the temperature regulation element further comprises an inlet system closing the inlet end of the first fluid channel, and bringing the proximal end of the second fluid channel into fluid communication with thermal transfer fluid. The inlet system may be an integral part or a separable element to the second fluid channel. The inlet system allows thermal transfer fluid to flow into the second fluid channel, but not to the first fluid channel. The inlet system is further in connection with a thermal transfer fluid circulation system responsible for setting the temperature of the thermal transfer fluid flowing into the body and/or for returning the thermal transfer fluid from the body.

In one embodiment, the cross-sectional surface area of the first fluid channel and the second fluid channel are constant along the whole length of each fluid channel. In other words, the cross-sectional profile of the channels is constant. Such arrangement may have the advantage that the parts are simple to manufacture, and that the adjustment of optimization of the thermal transfer fluid flow may be simple to predict. Further, as the thermal transfer fluid is gradually provided from the second fluid channel into the first fluid channel, the volume of the fluid flowing in the first fluid channel increases from the inlet end towards the outlet end. If the cross-sectional surface area of the first fluid channel is constant, the flow velocity of the thermal transfer fluid increases towards the outlet end of the first fluid channel. Without limiting the current disclosure to any specific theory, this could enhance the thermal exchange between the thermal transfer fluid and the body. This may take place through increased volume rate of the thermal transfer fluid being in thermal exchange with the body, and through thinning of the boundary layer between the thermal transfer fluid and the body.

However, in some embodiments, the design of the battery pack or other reasons might favor having variable cross-sectional surface areas of the first fluid channel and/or the second fluid channel. In such embodiments, for example the cross-sectional surface area of the second fluid channel may decrease to compensate the reduction of thermal transfer fluid volume flowing in the second fluid channel.

In an embodiment, the cross-sectional surface area of the second fluid channel is equal to or larger than the cross-sectional surface area of the first fluid channel at a given position of the body. In an embodiment, the cross-sectional surface area of the second fluid channel is larger than the cross-sectional surface area of the first fluid channel. It may be, for example, three or five times as large. The relationship of the cross-sectional surface areas of the first and second fluid channels may vary. Therefore, embodiments may be envisaged in which the cross-sectional surface area of the second fluid channel is smaller than the cross-sectional surface area of the first fluid channel at a given position of the body.

In one aspect, a battery module is disclosed. It is characterized in that it comprises a temperature regulation element according to the current disclosure. A battery module is a unit of battery cells connected to each other in a specific electrical arrangement. A battery module may further comprise control and safety devices, as well as a frame to protect the battery cells, and to attach the battery module in place. The temperature regulation element according to the current disclosure may be implemented as a part of the battery module, for example as a part of the frame, or as a separate entity inside the frame.

The battery module according to the present disclosure thus comprises a temperature regulation element according to the current disclosure, and a plurality of battery cells. The battery module may comprise one temperature regulation element or several temperature regulation elements. In case there is more than one temperature regulation element, only one may be according to the current disclosure. Alternatively, more than one, or even all temperature regulation elements may be according to the present disclosure.

In yet another aspect, a battery pack is disclosed. It is characterized in that it comprises a temperature regulation element according to the current disclosure.

A battery pack is the complete set of battery cells of a device, such as an industrial apparatus, or a vehicle. A battery pack may comprise one battery module, or several battery modules. A battery pack further comprises the other necessary elements to operate the battery cells of the device. The battery pack may contain a casing or a housing. Thus, the temperature regulation element according to the current disclosure may be implemented as a part of the battery pack, for example as a part of the casing or the housing, or as a separate entity inside the casing or housing.

In yet another aspect, use of a temperature regulation element according to the current disclosure for regulating the temperature of battery cells in an electricity-powered vehicle is disclosed.

### FIGURES

The following figures are used to illustrate the temperature regulation element according to the present disclosure. The figures are not drawn to proportion, unless otherwise indicated. Many of the structures not directly related to the current temperature regulation element are omitted for clarity.

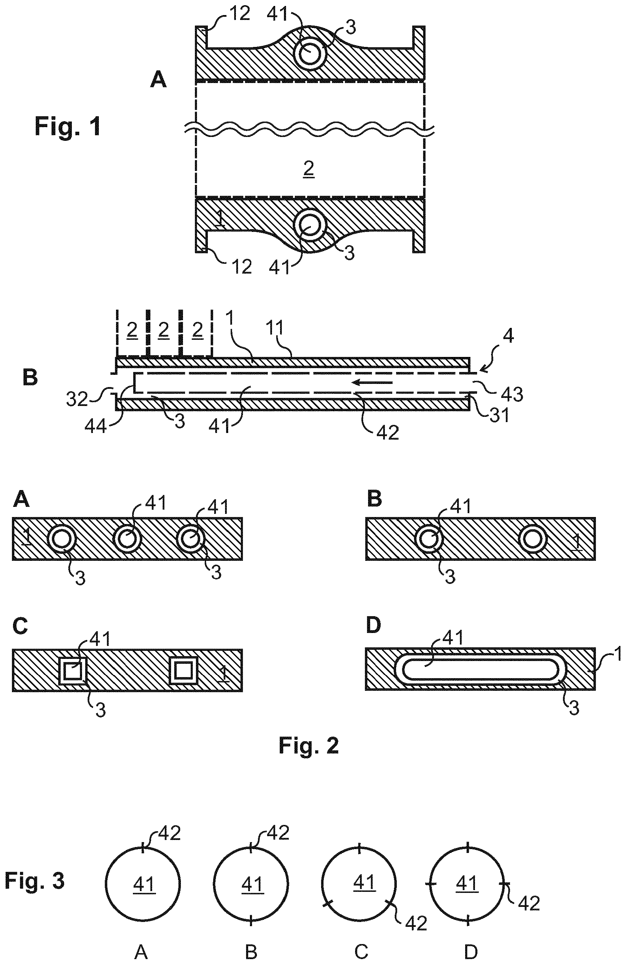

Figure 1A depicts a schematic cross section of a temperature regulation element according to the present disclosure. Two temperature regulation elements are depicted on two sides of a battery cell 2. In such an embodiment, the thermal transfer fluid may flow from one temperature regulation element to another. For example, if one of the temperature regulation elements is on the terminal side of the battery cells 2 (i.e. on the side where the electrical contacts of the battery cells 2 are located), the thermal transfer fluid may first flow through the temperature regulation element on this side of the battery cell 2, and thereafter directly to the temperature regulation element on the opposite side. Although possible, such connection between the two temperature regulation elements is not depicted in figure 1A.

The temperature regulation element comprises a body 1. The body 1 comprises a heat-exchange surface 11 on which a battery cell 2 (dashed outline) is positioned. In the embodiment of fig. 1A, the cross section of the body 1 comprises a rectangular portion, with legs 12 extending on two sides of the rectangular portion. The legs 12 may extend along the whole length of the body 1.

A first fluid channel 3 extends in the body. In fig. 1A, there is only one first fluid channel 3 in the temperature regulation element. The first fluid channel is positioned partly within the rectangular portion of the body 1, and partly inside a bulge extending in the direction of the first fluid channel.

Both the first fluid channel 3 and the second fluid channel 41 have a circular cross section. The second fluid channel 41 is positioned in the middle of the first fluid channel 3, i.e. the two fluid channels are concentric. There is a plurality of openings on the surface limiting the second fluid channel 41 (in many embodiments being a tube), but they are not depicted in fig. 1A.

Figure 1B displays the temperature regulation element of fig. 1A as a cross section along the length of the first fluid channel 3. The battery cells 2 (dashed outline) are shown in thermal contact with the heat-exchange surface 11 of the body 1. The fluid distribution means 4 is schematically presented and comprises a tube 41 forming the second fluid channel 41 extending inside the first fluid channel 3. An arrow inside the second fluid channel 41 depicts the flow direction of the thermal transfer fluid.

A first fluid channel 3 extends through the whole length of the body 1 and comprises an inlet end 31 where the thermal transfer fluid enters the body 1. The inlet end 31 is closed apart from the entry point of the fluid distribution means 4 into the first fluid channel 3. The first fluid channel 3 comprises an outlet end 32, which is open and through which the thermal transfer fluid flows out of the body 1.

A second fluid channel 41 extends inside the first fluid channel 3. The second fluid channel 41 extends almost through the body and comprises a proximal end 43 through which the thermal transfer fluid enters the body. The second fluid channel 41 comprises a distal end 44 at the opposite end of the second fluid channel 41. In the embodiment of fig. 1B, the distal end 44 is closed.

The structure limiting the second fluid channel 41, such as a wall of the tube, comprises openings 42, which are schematically depicted in fig. 1B. Although not drawn to scale, the openings are more frequent close to the proximal end 43 of the second fluid channel, and less frequent close to the distal end 44 of the second fluid channel 41. In this embodiment, the holes are arranged in two rows on the opposite sides of the cross section of the tube. The holes of each row are positioned at the same points along the length of the second fluid channel 41 (i.e. the two holes are opposite to each other).

Thus, the thermal transfer fluid enters the body through the proximal end 43 of the second fluid channel 41, flows through the openings 42 into the first fluid channel 3 and exits the body through its outlet end 32.

Fig. 2A depicts a cross section of an embodiment of a temperature regulation element according to the present disclosure, in which the body 1 is shaped as a rectangular prism. The body 1 comprises three first fluid channels 3, each containing a second fluid channel 41. However, in a modification of the embodiment, only one, for example the middle one, of the first fluid channels 3 could contain a second fluid channel 41. In another modification, only two, for example side-most ones, of the first fluid channels 3 could contain a second fluid channel 41.

Fig. 2B is similar to fig. 2A, but in this embodiment, there are two first fluid channels 3.

Fig. 2C depicts an embodiment similar to that of fig. 2B. However, the cross section of the first fluid channel 3 and the second fluid channel 41 is square.

In fig. 2D, the body 1 comprises a single flat first fluid channel 3, and a similarly shaped second fluid channel 41.

In figs 2A to D, the openings 42 are not indicated. However, the openings 42 could be positioned similarly to fig 1B. Alternatively, the openings could be located so that the thermal transfer fluid flowing would flow horizontally through the openings 42 in the viewing direction of figs 2A to D. Further, there could be only one opening 42 in the second fluid channel 42 at each position along the length of the second fluid channel 41. For example, the openings 42 could be arranged in one row.

Further, it would be possible to adjust the flow of each first fluid channel 3 and the corresponding second fluid channel 41 independently to optimize the temperature regulation of the battery cells. For example, in fig. 2A, the second fluid channel 41 in the first fluid channel 3 in the middle of the body 1, may have openings on two sides to direct the thermal transfer fluid in the direction of each side-most first fluid channel 3, whereas the second fluid channels 41 in the two side-most first fluid channels 3 could direct the thermal transfer fluid only towards the side of the body 1 (i.e. horizontally outwards in the viewing direction of fig. 2A).

Accordingly, it would also be possible to adjust the ratio of the cross-sectional surface areas (in the embodiments of figs 2A and B, the diameter) of the first fluid channel 3 and the second fluid channel 41 differently in each first fluid channels 3.

Fig. 3 is a schematic presentation of the positioning of the openings 42 in the cross section of the second fluid channel 41. The size of the opening 42 is not indicated in the figure, but only the position of the opening 42 is indicated. In many embodiments, all the openings 42 have the same size, but embodiments may be envisaged in which the openings 42 have two or more different sizes.

In panel A, the there is only one opening at a given position of the second fluid channel 41. The opening 42 may be in the same position on the cross section (i.e. the openings are in a straight row), or its position on the cross section may vary (i.e. not in a straight row). This embodiment could also be realized by alternating the openings 42 on the opposite sides of the second fluid channel 41.

In panel B, there are two openings 42 at a given position along the length of the second fluid channel 41. For example, two rows of openings 42 could be positioned on the opposite sides of the second fluid channel 41.

In panel C, an embodiment having three openings 42 at a given position is depicted, and in panel D, an embodiment with four openings 42.

All the above-mentioned directions in which the openings are positioned are possible even if the openings 42 are not positioned at the same position along the length of the second fluid channel 41. Various alternating patterns can be devised to adjust the flow of the thermal transfer fluid as needed in each application.

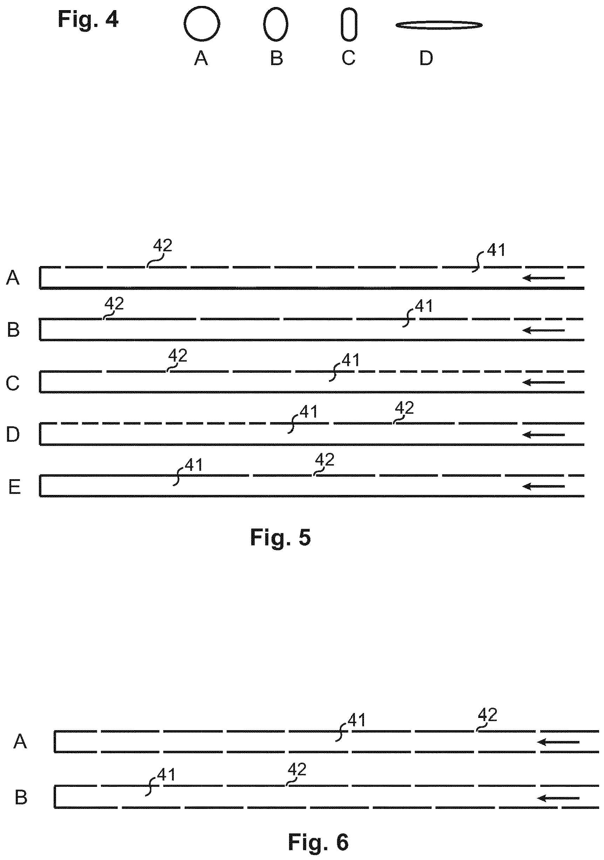

Fig. 4 depicts some exemplary forms of the openings 42 according to the current disclosure. In panel A, a circular opening is drawn. In panel B, the opening is oval-shaped. In panels C and D, two different slits are indicated. The openings that are not radially symmetrical may be positioned in any direction on the second fluid channel 41.

Fig 5 shows some exemplary positioning patterns of the openings 42 along the second fluid channel 41. Only one row of openings 42 is drawn for clarity, but as above indicated, the openings 42 may be positioned in various ways along the circumference of the second fluid channel 41. The openings 42 are drawn to have constant diameter, but in some embodiments, openings 42 with different diameters (or cross-sectional areas) may be present. The direction of thermal transfer fluid flow is indicated by an arrow near the proximal end of the second fluid channel. In all the embodiments depicted in fig. 5, the distal end of the second fluid channel is closed.

Panel A indicates openings 42 along the whole length of the second fluid channel 41 with constant intervals. Panel B depicts openings 42 along the whole length of the second fluid channel 41 with the openings near the proximal end being more frequent, and the distance between neighboring openings 42 increasing steadily.

In the embodiment of panel C, the openings 42 are more frequent near the proximal end of the second fluid channel, but the distance between the openings 42 changes at one position on the second fluid channel 41. Thus, in this embodiment, there are two portions of the second fluid channel, each having a constant frequency of the openings 42. The position along the second fluid channel 41 in which the frequency changes may be different in different applications. In panel D, the situation is as in panel C, except the openings 42 are more frequent closer to the distal end of the second fluid channel 41.

Panel E depicts an embodiment, in which the openings 42 are absent from a portion of the second fluid channel 41. In this figure, the portion is at the distal end of the second fluid channel, but it could well be near the proximal end. Even if the second fluid channel does not have openings, it may server a function in the first fluid channel. First, if the closed portion (i.e. portion without the openings 42) is in the proximal end, it has the function of delivering the thermal transfer fluid to the openings 42 further along the second fluid channel 41. Second, even if the closed portion is at the distal end of the second fluid channel, it may still affect the flow dynamics in the first fluid channel. For example, it will keep the volume available to the thermal transfer fluid constant, thus keeping up the previously attained flow speed.

Fig. 6 illustrates the alternatives of arranging openings 42 on the second fluid channel 41 either in the same position along the length of the channel 41 (panel A), or in an alternating pattern (panel B).

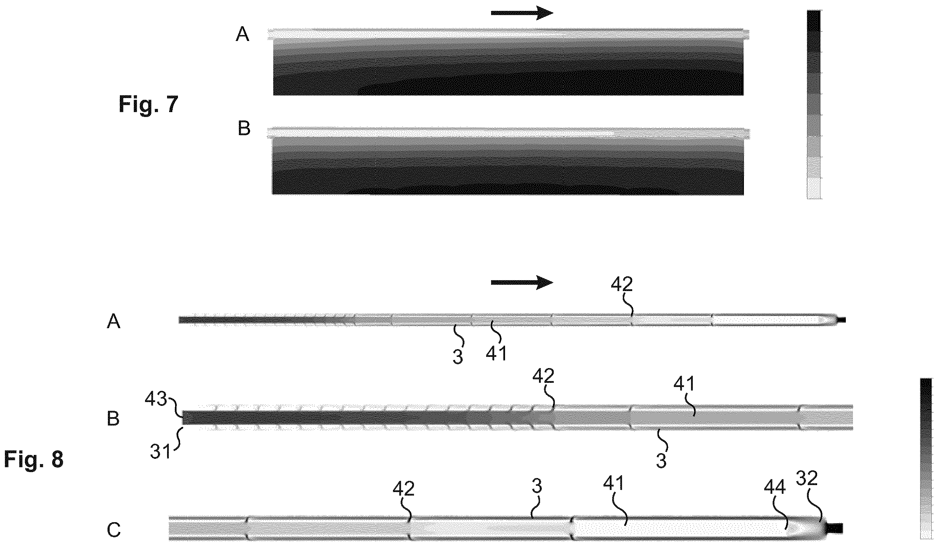

Fig 7 depicts a comparison of temperature distribution in a temperature regulation element according to the present disclosure (panel B) and in a prior-art temperature regulation element (panel A). Flow direction of the thermal transfer fluid is indicated with an arrow, and the darker the color, the higher the temperature of the thermal transfer fluid or the temperature regulation element is. This embodiment simulates a temperature regulation element of approximately 1 m in length, and in the figure, the thermal transfer fluid is cooling the battery cells.

The embodiments presented in fig. 7 contains temperature regulation fins, which account for the majority of the area of the temperature regulation elements in the figure. Therefore, the fluid channel extends in the top part of each temperature regulation element. The second fluid channel is not depicted in panel B, only the temperature of the thermal transfer fluid and the body.

In fig. 7, it is clearly visible that the thermal transfer fluid running in the fluid channel has a lower temperature further along the temperature regulation element in in panel B. Additionally, both panels show how the temperature of the body (in this position the thermal transfer fin that extends furthest away from the fluid channel), rises as the distance from the fluid channel increases.

However, in panel B, the temperature gradient is similar throughout the length of the temperature regulation element, whereas in panel A, the temperature rises already closer to the fluid channel. This result means that the battery cells being in thermal contact with the temperature regulation element are cooled more evenly along the length of the fluid channel, i.e. in every battery cell, the temperature gradient between the positions close to the thermal transfer fluid and further away from it, is similar.

Fig. 8 depicts the flow velocity of the thermal transfer fluid in a temperature regulation element according to the present disclosure. Flow direction of the thermal transfer fluid is again indicated with an arrow. The increase in flow velocity of the thermal transfer fluid is indicated with darkening of the color.

Panel A depicts an overview of the first fluid channel 3 and the second fluid channel 41. The details of the figure can be seen more clearly in panels B and C, which are magnifications of the first and second half of the view in panel A, respectively.

In this embodiment, all the thermal transfer fluid flows into the second fluid channel 41 and enters the first fluid channel 3 through the openings 42 in the second fluid channel 41. The openings 42 are more frequent closer to the proximal end 43 of the second fluid channel 41 than further away from it. The openings 42 in the second fluid channel 31 can be seen as darker notches, where the thermal transfer fluid flows from the second fluid channel 31 to the first fluid channel 4.

In this arrangement, the flow velocity in the second fluid channel is the highest at the proximal end 43 and slows down as the thermal transfer fluid flows gradually into the first fluid channel 3 through the openings 42. The distal end 44 can be seen as a white area close to the outlet end 32 of the first fluid channel 3. Correspondingly, in the first fluid channel 3, the flow velocity of the thermal transfer fluid is lowest near the inlet end 31, and increases towards the outlet end 32. The outlet is formed narrower than the rest of the first fluid channel 3, and this can be seen as a black constriction in figure 8 (panels A and C).

It is obvious to a person skilled in the art that with the advancement of technology, the basic idea of the invention may be implemented in various ways. The invention and its embodiments are thus not limited to the examples described above; instead, they may vary within the scope of the claims.

## Claims

1. A temperature regulation element for a battery cell (2) comprising:
a metal body (1) comprising
- at least one heat-exchange surface (11) for making thermal contact with a battery cell (2);
- at least one first fluid channel (3) with an inlet end (31) and an outlet end (32) for thermal transfer fluid to flow in, wherein the first fluid channel (3) extends inside the body (1);
the temperature regulation element being **characterized in that** fluid distribution means (4) forming a second fluid channel (41) is positioned inside the first fluid channel (3) for providing thermal transfer fluid gradually into the first fluid channel (3) along the length of the first fluid channel (3).

2. The temperature regulation element according to claim 1, wherein the at least one first fluid channel (3) is straight and extends substantially along the whole length of the body (1).

3. The temperature regulation element according to claim 1 or 2, wherein the body (1) is made of extruded aluminum or aluminum alloy.

4. The temperature regulation element according to any of the preceding claims, wherein the second fluid channel (41) is a tube comprising openings (42) along at least a part of its length.

5. The temperature regulation element according to claim 4, wherein the tube (41) is made of plastic or of plastic composite or of aluminium.

6. The temperature regulation element according to any of the preceding claims, wherein the second fluid channel (41) extends substantially along the whole length of the first fluid channel (3).

7. The temperature regulation element according to any of the preceding claims, wherein the second fluid channel (41) comprises a proximal end (43) at the inlet end (31) of the first fluid channel, and a distal end (44), and wherein the distal end (44) is closed.

8. The temperature regulation element according to any of the preceding claims, wherein the thermal transfer fluid is configured to enter the first fluid channel (4) only through the fluid distribution means (4).

9. The temperature regulation element according to claim 8, wherein the temperature regulation element further comprises an inlet system (5) closing the inlet end (31) of the first fluid channel (3), and bringing the proximal end (43) of the second fluid channel (41) into fluid communication with thermal transfer fluid.

10. The temperature regulation element according to any of the preceding claims, wherein the cross-sectional surface area of the first fluid channel (3) and the second fluid channel (4) are constant along the whole length of each fluid channel (3, 41).

11. The temperature regulation element according to any of the preceding claims, wherein the body (1) comprises one first fluid channel (3).

12. The temperature regulation element according to any of claims 1-10, wherein the body (1) comprises two or more first fluid channels (3).

13. A battery module, **characterized in that** it comprises a temperature regulation element according to any of the preceding claims.

14. A battery pack, **characterized in that** it comprises a temperature regulation element according to any of claims 1-12.

15. Use of a temperature regulation element according to any of claims 1 to 12 for regulating the temperature of battery cells in an electricity-powered vehicle.
